# EUROPÄISCHE PATENTSCHRIFT

(11) **EP 0 401 597 B1**
(45) Veröffentlichungstag und Bekanntmachung des Hinweises auf die Patenterteilung: **09.11.1994**
(21) Anmeldenummer: 90109761.8
(22) Anmeldetag: 22.05.1990
(51) Int. Cl.: B26D 5/32

(54) **Verfahren und Vorrichtung zum Steuern eines formatlängengerechten Schneidens von Materialbahnen**
Control arrangements for cutting a web according to the length
Dispositif et méthode de régulation pour couper une bande en longueurs définies

(30) Priorität: 08.06.1989 DE 3918665
(43) Veröffentlichungstag der Anmeldung: 12.12.1990
(73) Patentinhaber: Schmidt, Thomas, D-8482 Neustadt a.d. Waldnaab (DE)
(72) Erfinder: Laumann, Werner, Dr., D-8501 Forth-Eckental (DE); Schmidt, Thomas, D-8482 Neustadt a.d. Waldnaab (DE)
(74) Vertreter: Rau, Manfred, Dr. Dipl.-Ing.

(56) Entgegenhaltungen:
- EP-A- 0 109 266
- DE-A- 3 325 226
- US-A- 4 361 260
- PATENT ABSTRACTS OF JAPAN vol. 10, no. 134 (M-479)(2191) 17. Mai 1986& JP-A- 60 258 048 (KIYOURITSU FUTABA JIDOUKI KK) 19 Dezember 1985

## Beschreibung

Die Erfindung betrifft ein Verfahren nach dem Oberbegriff des Anspruches 1 und eine Vorrichtung nach dem Oberbegriff des Anspruches 5.

Bei einer bekannten Vorrichtung dieser Art werden die kinematischen Größen der Materialbahn, wie Weg, Geschwindigkeit und Beschleunigung mittels eines auf der Materialbahn mitlaufenden Meßrades erfaßt. Mittels dieses Meßrades werden bestimmten Wegstrecken der Materialbahn entsprechende analoge oder digitale Signale erfaßt, die somit proportional der Geschwindigkeit der Materialbahn sind, woraus wiederum durch Vergleich benachbarter Signale sich Beschleunigungen bestimmen lassen. Weiterhin ist ein Fotosensor vorhanden, der beim Bedrucken der Materialbahn mit Druckbildern aufgedruckte sogenannte Passermarken erfaßt, wobei jeweils eine Passermarke in einer ganz bestimmten Zuordnung zu einem Druckbild ist. Dieser Fotosensor gibt somit ein Signal, das die Lage des Bildes zu einem bestimmten Zeitpunkt, wenn nämlich die Passermarke am Sensor vorbeiläuft, wiedergibt. Die mittels des Meßrades erfaßten kinematischen Größen sind notwendig, um den Weg, die Bahngeschwindigkeit und auch Geschwindigkeitsänderungen einfließen lassen zu können, die in der Zeit vom Erfassen der Passermarke bis zum Schneidvorgang auftreten. Die Erfassung der kinematischen Größen mittels eines Meßrades birgt Nachteile in sich, da das Meßrad eine Massenträgheit aufweist und somit insbesondere bei Beschleunigungen der Materialbahn Fehler erzeugt. Weiterhin ergeben sich Meßfehler des Meßrades aufgrund von Durchmesseränderungen, die sich aus Temperaturschwankungen ergeben. Weiterhin ergeben sich Meßfehler durch einen Schlupf zwischen Meßrad und Materialbahn. Um den Schlupf möglichst klein zu halten, muß das Meßrad mit einem bestimmten Auflagedruck auf die Materialbahn aufgepreßt werden, was wiederum zu Komprimierungen der Materialbahn führt, die deren Aussehen nachteilig beeinflussen können. In diesem Zusammenhang können auch Oberflächenstrukturen des Meßrades, wie eine zur Verringerung von Schlupf vorgesehene Rändelung, auf die Materialbahn übertragen werden, wodurch diese beschädigt wird. In der Regel werden die kinematischen Größen mittels des Meßrades auf der dem Druckbild abgewandten Seite der Materialbahn erfaßt; wesentlich ist jedoch, daß die die Druckbilder enthaltende Seite der Materialbahn exakt lagegerecht, also passergerecht, geschnitten wird. Weiterhin bestimmt das in das Meßrad integrierte MeßSystem mit seinem Auflösungsvermögen die erzielbare Schnittlängengenauigkeit. Diesen zahlreichen Nachteilen des Meßrades steht entgegen, daß das gattungsgemäß vorausgesetzte Gesamtverfahren sich in der Praxis bewährt hat.

Aus der US-A-4 361 260 ist ein Verfahren und eine Vorrichtung gemäß dem Oberbegriff der Ansprüche 1 und 5 bekannt, wobei die Erfassung der Materialbahn-Geschwindigkeit nicht durch ein Meßrad, sondern einen mit dem Antriebsmotor der Vorschubwalze der Materialbahn gekoppelten Tachometer erfolgt. Auch dabei werden aufgrund des möglichen Schlupfes zwischen Bahn und Walze Meßfehler erzeugt.

Der Erfindung liegt die Aufgabe zugrunde, ein Verfahren der gattungsgemäßen Art und eine Vorrichtung der gattungsgemäßen Art zu schaffen, mittels derer eine sehr genaue Steuerung eines druckbildgerechten Schneidens ohne Beschädigung der Materialbahn erreicht wird.

Diese Aufgabe wird bei einem Verfahren der gattungsgemäßen Art erfindungsgemäß durch die Merkmale im Kennzeichnungsteil des Anspruches 1 gelöst. Bei der Vorrichtung der gattungsgemäßen Art wird sie durch die Merkmale im Kennzeichnungsteil des Anspruches 5 gelöst. Wesentlich ist, daß alle kinematischen Größen der laufenden Materialbahn, also Weg, Geschwindigkeit und Beschleunigungen berührungslos erfaßt werden. Es wird ständig der exakte Ort der Materialbahn erfaßt, wodurch wiederum ein genau formatlängengerechtes Schneiden möglich ist. Unter formatlängengerechtem Schneiden wird zum einen ein druckbildgerechtes Schneiden verstanden, wenn nämlich die Materialbahn mit Druckbildern bedruckt ist. Zum anderen wird hierunter ein Schneiden exakt nach einer vorgegebenen Haulage verstanden. Das erfindungsgemäße Verfahren und die erfindungsgemäße Vorrichtung ist also primär zum Schneiden von bedruckten Materialbahnen, aber auch zum exakten Schneiden von nichtbedruckten Materialbahnen einsetzbar.

Durch die vorteilhaften Weiterbildungen nach den Ansprüchen 4 und 7 wird eine beinahe beliebige Erhöhung der Genauigkeit erreicht, da aus zwei benachbarte durch Striche des Strichcodes erzeugten Signalen eine ganze Zahl von jeweils in gleichen Zeitabständen zueinander liegenden Signalen erzeugt werden kann. Es kann also eine Vervielfachung der Signale durchgeführt werden. Damit ist eine Genauigkeitssteigerung hinsichtlich der Lage des Schnittes bis in den Bereich von zehntel Millimetern möglich. Die Schnittlängengenauigkeit ist an sich direkt proportional dem Abstand benachbarter

Striche des Strichcodes, wobei - wie erwähnt - hier durch eine Spreizung noch eine erhebliche Erhöhung der Genauigkeit möglich ist. Die üblicherweise vorgesehenen bereits erwähnten Passermarken können zusätzlich vorgesehen sein; auf sie kann aber auch verzichtet werden, da dem Strichcode auch die exakte Lage des Druckbildes und somit auch der Schnittstelle entnommen bzw. zugeordnet werden kann.

Weitere Einzelheiten der Erfindung ergeben sich aus der nachfolgenden Beschreibung eines Ausführungsbeispieles anhand der Zeichnung. Es zeigt
Fig. 1 eine schematische Darstellung einer Vorrichtung zum Steuern der Schneideinheit für eine fortlaufend transportierte Materialbahn und
Fig. 2 in Diagrammdarstellung eine Spreizung der in der Vorrichtung nach Fig. 1 beim Abtasten eines Strichcodes der Materialbahn erzeugten Signale.

Eine in einem nicht dargestellten Druckwerk mit ebenfalls nicht dargestellten Druckbildern bedruckte Materialbahn 1 bewegt sich in Transportrichtung 2 zu einer Schneideinheit 3, einem sogenannten Querschneider. Diese Schneideinheit 3 besteht in üblicher Weise aus zwei gegensinnig entsprechend den Drehrichtungspfeilen 4,5 antreibbaren Messertrommeln 6,7, von denen die eine mit einem Schneidmesser 8 und die andere mit einem Gegenmesser 9 versehen ist. Der synchrone Antrieb der beiden Messertrommeln 6,7 erfolgt mittels eines Antriebsmotors 1o in der Weise, daß die Drehrichtung entsprechend den Drehrichtungspfeilen 4,5 an den einander unmittelbar benachbarten Stellen gleich der Transportrichtung 2 ist. An dieser Stelle kommen jeweils Schneidmesser 8 und Gegenmesser 9 in Eingriff miteinander und schneiden von der Materialbahn 1 einen Bogen 11 ab. Das Schneiden soll so erfolgen, daß es passergerecht oder formatlängengerecht ist, d.h. daß der Schnitt exakt an einer vorgegebenen Stelle relativ zum Druckbild erfolgt.

An einer Seite der Materialbahn 1 ist ein Strichcode angebracht, der durch einzelne äquidistant zueinander angeordnete Striche 12 auf der Ober- oder Unterseite der Materialbahn gebildet ist. Der Abstand a benachbarter Striche 12 des Strichcodes kann einige Millimeter bis einige wenige Zentimeter, beispielsweise 5 bis 5o mm, üblicherweise 1o mm, betragen. Er ist auf jeden Fall um mindestens zwei Zehnerpotenzen kleiner als eine Formatlänge l eines nicht dargestellten Druckbildes. Die Formatlänge l, also die Haulänge, beträgt üblicherweise 5oo bis 5ooo mm. Aus Gründen der Übersichtlichkeit entspricht die Zahl der dargestellten Striche nicht diesem Verhältnis.

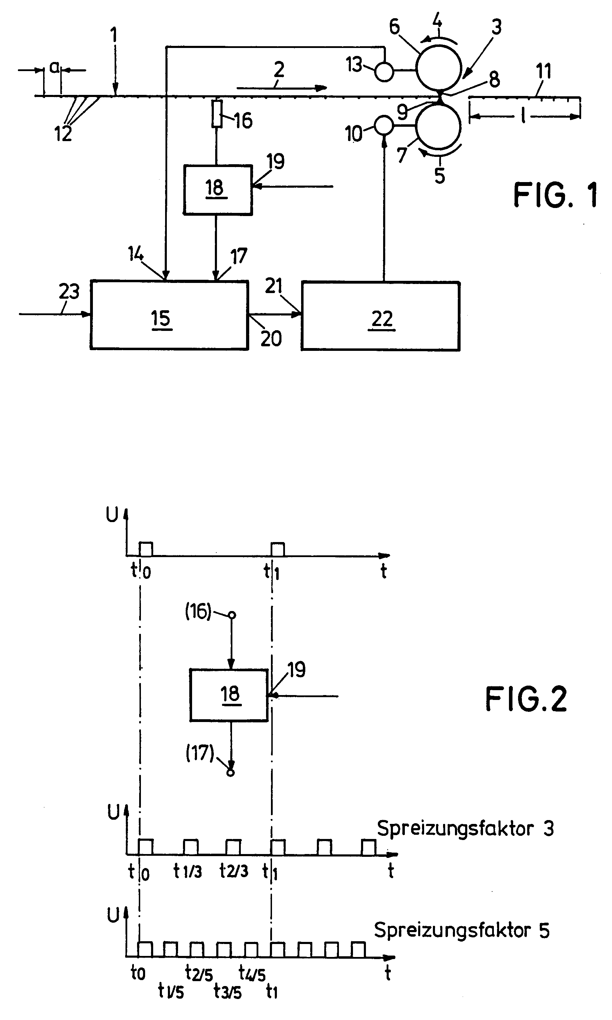

Mit mindestens einer Messertrommel 6 der Schneideinheit 3 ist ein Meßgeber 13 gekoppelt, der als Positionsgeber für die Messertrommeln 6,7 ausgebildet ist. Er gibt pro vollständiger Umdrehung der Messertrommeln 6,7 eine vorgegebene Zahl von Signalen auf einen Eingang 14 eines Reglers 15. Die Striche 12 des Strichcodes an der Materialbahn 1 werden mittels eines Foto-Sensors 16 erfaßt. Für jeden Strich werden ein oder mehrere Signale auf einen Eingang 17 des Reglers 15 gegeben. Zwischen den Sensor 16 und den Eingang 17 des Reglers 15 ist eine Signal-Transformations-Einheit 18 geschaltet, in der das vom Sensor 16 zum Eingang 17 übertragene Signal vervielfacht werden kann, und zwar entsprechend einem von außen über einen Eingang 19 einzugebenden Spreizungsfaktor. Dies ist in Fig. 2 erläutert.

In Fig. 2 oben sind über der Zeit t zwei Spannungs-Signale mit der Spannung U dargestellt, die vom Sensor 16 beim Vorbeilauf von zwei in Transportrichtung 2 aufeinanderfolgenden Strichen 12 des Strichcodes erzeugt werden. Das erste Signal wird zur Zeit t0 erzeugt, während das zweite Signal zur Zeit t1 erzeugt wird. Wenn der Spreizungsfaktor 3 über den Eingang 19 eingegeben ist, dann werden von der Signal-Transformations-Einheit 18 im Zeitabschnitt zwischen t0 und t1 drei Signale, und zwar zur Zeit t0, t 1/3 und t 2/3 abgegeben, die in gleichen Zeitabständen zueinander liegen. Wenn - was in Fig. 2 unten dargestellt ist - über den Eingang 19 ein Spreizungsfaktor 5 eingegeben ist, dann werden in dem Zeiterintervall zwischen t0 und t1 fünf in gleichen Zeitabständen zueinander liegende Signale zu den Zeiten t0, t 1/5, t 2/5, t 3/5 und t 4/5 auf den Eingang 17 abgegeben.

Die über den Eingang 17 in den Regler 15 eingegebenen Signale geben unmittelbar die kinematischen Größen der Materialbahn 1, nämlich deren Geschwindigkeit, Beschleunigung und ihre Stellung wieder. Diese Größen ergeben sich aus dem zeitlichen Abstand zweier benachbarter Signale bzw. den Änderungen der Zeitabstände zwischen benachbarten Signalen und der Zahl der Signale, wobei ein vorgegebener Abstand a zwischen zwei benachbarten Strichen 12 jeweils vorausgesetzt wird. Die über die Eingänge 14 und 17 in den Regler 15 eingegebenen Signale werden miteinander verglichen und zu Ausgangssignalen an einem Ausgang 2o verarbeitet, die auf einen Eingang 21 einer Steuereinheit 22 für den Antriebsmotor 1o der Schneideinheit 3 gegeben werden. Diese Steuereinheit 22 steuert den Antriebsmotor 1o. Die Verarbeitung der vom Meßgeber 13 einerseits und vom Sensor 16 andererseits auf den Regler 15 gegebenen Signale erfolgt in der Weise, daß ein absolut formatlängengerechtes, also druckbildgerechtes Schneiden der Materialbahn 1 mit der Schneideinheit 3 erfolgt. Hierbei werden auch Schwankungen in der Geschwindigkeit der Materialbahn 1 erfaßt. Wenn zusätzlich sogenannte Passermarken vorhanden sind, die jeweils beim Drucken der Bilder im Abstand l einer Formatlänge aufgedruckt werden, dann ist es zweckmäßig, wenn diese eine andere Breite in Transportrichtung 2 haben als die Striche 12, wodurch Signale einer anderen Breite erzeugt werden, so daß diese wiederum von den Signalen, die von den Strichen 12 erzeugt werden, unterscheidbar sind.

Ein Sollwert wird über einen Eingang 23 auf den Regler 15 aufgegeben. Hierbei handelt es sich um die Vorgabe der Schnittstelle, d.h. um die Vorgabe der sogenannten Haulage. Diese kann von Hand eingegeben werden oder von einem Rechner. Sie kann aber auch - wie bereits angesprochen - über eine Passermarke eingegeben werden. Diese kann in der bereits erwähnten Weise eingegeben werden oder über einen zweiten - in der Zeichnung nicht dargestellten - Sensor, der eine zusätzlich zum Strichcode eingegebene Marke erfaßt oder einen längeren Strich, der also einerseits vom Foto-Sensor 16 und andererseits von dem zusätzlichen Sensor erfaßt wird, der wiederum aber die normalen Striche 12 des Strichcodes nicht erfaßt, der also sich auf einer anderen Bahn befindet.

Der Strichcode kann zusätzlich auch noch eingesetzt werden, wenn aufeinanderfolgende bereits bedruckte Materialbahnen 1 gespliced werden sollen. Unter Splicen versteht man das Aneinanderfügen von Materialbahnen 1 während des Produktionsprozesses, um eine fortlaufende Produktion zu ermöglichen. Hierbei ist der Anfang einer nachfolgenden Materialbahn mit einem doppelt klebenden Klebeband versehen, das an das Ende der zu Ende gehenden, also vorlaufenden Materialbahn angefügt wird.

Mit Hilfe des Strichcode, und zwar insbesondere zusammen mit den erwähnten zusätzlichen Passermarken, kann sichergestellt werden, daß das Ende der vorlaufenden zu Ende gehenden Materialbahn und der Anfang der nachfolgenden Materialbahn genau formatlängengerecht zusammengefügt werden.

Alternativ kann aber auch erreicht werden, daß eine nicht formatlängengerechte Splice-Verbindung erfaßt wird und das formatgerechte, d.h. passergerechte, Herausschneiden eines im Splice-Verbindungs-Bereich liegenden Abschnittes bewirkt wird.

## Patentansprüche

1. Verfahren zum Steuern eines formatlängengerechten Schneidens von kontinuierlich transportierten, gegebenenfalls mit Druckbildern vorgegebener Formatlänge (l) versehenen Materialbahnen (1) mittels einer von einem Antrieb (1o) antreibbaren, mindestens mit einem Schneidmesser (8) versehenen Schneideinheit (3), wobei vor dem Schneiden fortlaufend die Stellung des Schneidmessers (8) und die Geschwindigkeit und die Beschleunigung der Materialbahn (1) und jeweils eine Formatlänge (l) gemessen und zur Ansteuerung des Antriebs (1o) der Schneideinheit (3) eingesetzt werden, dadurch gekennzeichnet, daß die Materialbahn (1) mit einem Strichcode versehen ist, der berührungslos mindestens zur Messung der Geschwindigkeit und der Beschleunigung erfaßt wird, wobei jeder Strich (12) des Strichcodes in ein Signal umgewandelt wird.

2. Verfahren nach Anspruch 1, dadurch gekennzeichnet, daß ein Strichcode mit äquidistanten Strichen (12) verwendet wird.

3. Verfahren nach Anspruch 1 oder 2, dadurch gekennzeichnet, daß die Erfassung des Strichcodes foto-sensorisch erfolgt.

4. Verfahren nach einem der Ansprüche 1 bis 3, dadurch gekennzeichnet, daß zwischen zwei benachbarten Signalen entsprechend einem vorgegebenen ganzzahligen Spreizungsfaktor eine ganze Zahl von Signalen in zeitgleichen Abständen erzeugt wird.

5. Vorrichtung zur Durchführung des Verfahrens nach Anspruch 1, mit einer von einem Antrieb (1o) antreibbaren, mindestens mit einem Schneidmesser (8) versehenen Schneideinheit (3), mit einem fortlaufend die Stellung des Schneidmessers (8) messenden Meßgeber (13), mit einer Einrichtung zur Messung der Geschwindigkeit und Beschleunigung der Materialbahn (1) und mit einer Regel- und Steuereinheit (15,22) zur Regelung des Antriebs (1o) der Schneideinheit (3) in Abhängigkeit von von dem Meßgeber (13) und der Einrichtung gemessenen Werten, dadurch gekennzeichnet, daß die Einrichtung durch einen einen Strichcode auf der Materialbahn (1) berührungslos abtastenden Sensor (Foto-Sensor 16) gebildet ist.

6. Vorrichtung nach Anspruch 5, dadurch gekennzeichnet, daß der Sensor ein Foto-Sensor (16) ist.

7. Vorrichtung nach Anspruch 5 oder 6, dadurch gekennzeichnet, daß zwischen den Sensor (16) und die Regel-und Steuereinheit (15,22) eine Signal-Transformations-Einheit (18) geschaltet ist.

## Claims

1. A method of controlling the cutting true to format length, of continuously conveyed webs of material (1), possibly provided with print images of predetermined format length (l) by means of a cutter unit (3) drivable by means of a drive (10), provided with at least one cutter blade (8), the position of the cutter blade (8) and the speed and the acceleration of the web of material (1), and in each instance a design length (l) being continuously measured before cutting and used for triggering the drive (10) of the cutter unit (3), characterized in that the web of material (1) is provided with a bar code which is scanned in a contactless manner for at least the measurement of speed and acceleration, each bar (12) of the bar code being converted into a signal.

2. A method according to claim 1, characterized in that a bar code is used which has equidistant bars (12).

3. A method according to claim 1 or 2, characterized in that the scanning of the bar code is effected by photosensing means.

4. A method according to one of claims 1 to 3, characterized in that, between two adjacent signals, and corresponding to a predetermined whole number spreading factor, a whole number of signals are produced at equidistant time intervals.

5. An arrangement for carrying out the method according to claim 1, with a cutter unit (3) drivable by means of a drive (10), provided with at least one cutter blade (8), with a measuring sensor (13) continuously measuring the position of the cutter blade (8), with a device for measuring the speed and acceleration of the web of material (1), and with a regulating and control unit (15, 22) for regulating the drive (10) of the cutter unit (3) depending upon values measured by the measuring sensor (13) and the device, characterized in that the device is a sensor (photosensor 16) scanning in a contactless manner a bar code on the web of material (1).

6. An arrangement according to claim 5, characterized in that the sensor is a photo-sensor (16).

7. An arrangement according to claim 5 or 6, characterized in that a signal conversion unit (18) is inserted between the sensor (16) and the regulation and control unit (15, 22).

## Revendications

1. Procédé de commander le coupage en longueurs de format définies de bandes de matière (1) transportées de façon continue et, s'il y a lieu, pourvues d'impressions d'une longueur de format (l) donnée par le moyen d'une unité de coupage (3) actionnable par un entraînement (10) et pourvu d'au moins une lame (8), la position de la lame (8) et la vitesse et l'accélération de la bande de matière (1) et une longueur de format (l) à la fois étant mesurées avant le coupage et étant employées pour l'excitation de l'entraînement (10) de l'unité de coupage (3), caractérisé en ce que la bande de matière (1) est pourvue d'un code à barres qui est balayé sans contact pour mesurer au moins la vitesse et l'accélération, chaque barre (12) du code à barres étant transformée en signal.

2. Procédé selon la revendication 1, caractérisé en ce qu'un code à barres avec des barres (12) équidistantes est utilisé.

3. Procédé selon la revendication 1 ou 2, caractérisé en ce que le balayage du code à barres se fait de façon photosensorielle.

4. Procédé selon l'une quelconque des revendications 1 à 3, caractérisé en ce qu'un nombre entier de signaux est produit à intervalles isochroniques entre deux signaux voisins selon un facteur d'écartement donné en nombres entriers.

5. Dispositif pour la réalisation du procédé selon la revendication 1 avec une unité de coupage (3) actionnable par un entraînement (10) et pourvue d'au moins une lame (8), avec un détecteur (13) qui analyse de façon continue la position de la lame, avec un dispositif pour mesurer la vitesse et l'accélération de la bande de matière (1), et avec un organe de réglage et de commande (15, 22) pour régler l'entraînement (10) de l'unité de coupage (3) en fonction de valeurs mesurées par le détecteur (13) et le dispositif, caractérisé en ce que le dispositif est un détecteur (photodétecteur 16) balayant sans contact une code à barres sur la bande de matière (1).

6. Dispositif selon la revendication 5, caractérisé en ce que le détecteur est un photodétecteur (16).

7. Dispositif selon la revendication 5 ou 6, caractérisé en ce qu'une unité de transformation en signaux (18) est intercalée entre le détecteur (16) et l'organe de réglage et de commande (15, 22).
